(19) Europäisches Patentamt
European Patent Office
Office européen des brevets

(11) **EP 2 878 356 B1**

(12) **FASCICULE DE BREVET EUROPEEN**

(45) Date de publication et mention
de la délivrance du brevet:
**14.08.2019   Bulletin 2019/33**

(51) Int Cl.:
***B01D 53/047*** *(2006.01)*

(21) Numéro de dépôt: **14194257.3**

(22) Date de dépôt: **21.11.2014**

(54) **PROCÉDÉ PSA AVEC UNE ÉTAPE ACTIVE PAR TEMPS DE PHASE**

PSA-VERFAHREN MIT AKTIVEN SCHRITTEN ZU JEDER PHASENZEIT

PSA PROCESS WITH AN ACTIVE STEP DURING EACH TIME PHASE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **28.11.2013   FR 1361731**

(43) Date de publication de la demande:
**03.06.2015   Bulletin 2015/23**

(73) Titulaire: **L'AIR LIQUIDE, SOCIETE ANONYME
POUR
L'ETUDE ET L'EXPLOITATION DES PROCEDES
GEORGES CLAUDE
75007 Paris (FR)**

(72) Inventeurs:
• **Monereau, Christian
34000 MONTPELLIER (FR)**
• **Carriere, Céline
93250 VILLEMOMBLE (FR)**
• **Renou, Elise
75015 PARIS (FR)**

(74) Mandataire: **Laigneau, Amandine
L'Air Liquide
Direction Propriété Intellectuelle
75, Quai d'Orsay
75321 Paris Cedex 07 (FR)**

(56) Documents cités:
**DE-A1- 3 526 899          US-A- 4 761 167
US-A1- 2013 255 492**

EP 2 878 356 B1

**Description**

La présente invention concerne un procédé de traitement d'un gaz par adsorption, du type dans lequel on utilise une unité de traitement par adsorption à modulation de pression, couramment appelé unité PSA (pour « Pressure Swing Adsorption »), et plus particulièrement les unités PSA mettant en oeuvre au moins 5 adsorbeurs.

De manière générale, un procédé par adsorption en phase gazeuse permet de séparer une ou plusieurs molécules d'un mélange gazeux les contenant, en exploitant la différence d'affinité d'un ou plusieurs adsorbants pour les différentes molécules constitutives du mélange. L'affinité d'un adsorbant pour une molécule dépend d'une part de la structure et la composition de l'adsorbant et d'autre part des propriétés de la molécule, en particulier sa taille, sa structure électronique et ses moments multipolaires. Un adsorbant peut être par exemple une zéolite, un charbon actif, une alumine activée éventuellement dopée, un gel de silice, un tamis moléculaire carboné, une structure métallo-organique, un oxyde ou hydroxyde de métaux alcalins ou alcalino-terreux, ou une structure poreuse contenant de préférence une substance capable de réagir réversiblement avec les molécules, substance telle que amines, solvants physique, complexants métalliques, oxydes ou hydroxydes métalliques par exemple.

Les matériaux adsorbants les plus classiques sont sous forme de particules (billes, bâtonnets, concassés...) mais existent également sous forme structurée tels les monolithes, roues, contacteurs à passages parallèle, tissus, fibres...

On peut distinguer 3 grandes familles de procédé par adsorption : les procédés à charge perdue, les procédés à modulation de température appelé TSA (Température Swing Adsorption) et enfin les procédés PSA (Pressure Swing Adsorption).

Dans les procédés à charge perdue - on parle souvent dans ce cas de lit de garde- on met en place une nouvelle charge lorsque celle en cours d'utilisation est saturée par les impuretés ou plus généralement quand elle ne peut plus jouer son rôle de protection de manière suffisante.

Dans les procédés de type TSA, l'adsorbant en fin d'utilisation est régénéré in situ, c'est-à-dire que les impuretés arrêtées sont évacuées afin que le dit adsorbant récupère l'essentiel de ses capacités d'adsorption et puisse recommencer un cycle d'épuration, l'effet de régénération essentiel étant dû à une élévation de température.

Enfin, dans les procédés de type PSA, l'adsorbant en fin de phase de production est régénéré par la désorption des impuretés obtenue au moyen d'une baisse de leur pression partielle. Cette baisse de pression peut être obtenue par une baisse de la pression totale et/ ou par balayage avec un gaz exempt ou contenant peu d'impuretés.

On s'intéresse ici à ce dernier type de procédé par PSA.

Les procédés par adsorption modulée en pression sont utilisés aussi bien pour éliminer

des traces d'impuretés - par exemple de teneur inférieure à 1% dans le gaz d'alimentation - que pour séparer des mélanges contenant des dizaines de % de différents gaz. Dans le premier cas, on parle généralement d'épuration (par exemple un séchage de gaz) et de séparation dans le second cas (par exemple production d'oxygène ou d'azote à partir d'air atmosphérique). Dans les cas les plus complexes, on peut avoir bien sûr épuration et séparation dans une même unité.

Dans le cadre de la présente invention, on désigne par les termes PSA tout procédé d'épuration ou de séparation de gaz mettant en oeuvre une variation cyclique de la pression que voit l'adsorbant entre une pression haute, dite pression d'adsorption, et une pression basse, dite pression de régénération. Ainsi, cette appellation générique de PSA est employée indifféremment pour désigner les procédés cycliques suivants, auxquels il est aussi courant de donner des noms plus spécifiques en fonction des niveaux de pression mis en jeu ou du temps nécessaire à un adsorbeur pour revenir à son point initial (temps de cycle) :

- les procédés VSA dans lesquels l'adsorption s'effectue sensiblement à la pression atmosphérique, préférentiellement entre 0.95 et 1.25 bar abs et la pression de désorption est inférieure à la pression atmosphérique, typiquement de 50 à 400 mbar abs
- les procédés MPSA ou VPSA dans lesquels l'adsorption s'effectue à une pression haute supérieure à la pression atmosphérique, typiquement entre 1.5 et 6 bar abs, et la désorption à une pression basse inférieure à la pression atmosphérique, généralement comprise entre 200 et 600 mbar abs
- les procédés PSA proprement dits dans lesquels la pression haute est sensiblement supérieure à la pression atmosphérique, typiquement entre 3 et 50 bar abs et la pression basse sensiblement égale ou supérieure à la pression atmosphérique, généralement entre 1 et 9 bar abs.
- les procédés RPSA (Rapid PSA) pour lesquels la durée du cycle de pression est typiquement inférieure à la minute

Les procédés URPSA (Ultra Rapid PSA) pour lesquels la durée du cycle de pression est de l'ordre de quelques secondes maximum.

Il convient de noter que ces diverses appellations ne sont pas standardisées et que les limites sont sujettes à variation.

On rappelle que sauf avis contraire, l'utilisation du terme PSA recouvre ici toutes ces variantes.

On peut noter également que la fraction gazeuse valorisée dans un procédé PSA peut correspondre à la fraction produite à la haute pression mais aussi à la fraction extraite en basse pression dès lors que le ou les constituants recherchés sont les plus adsorbables du mélange.

Un adsorbeur va donc commencer une période d'adsorption jusqu'à ce qu'il soit chargé dans le ou les constituants à arrêter à la pression haute puis va être régénéré par dépressurisation et extraction des composés adsorbés avant d'être remis en état pour recommencer une nouvelle période d'adsorption. L'adsorbeur a alors effectué un "cycle de pression" et le principe même du procédé PSA est d'enchaîner ces cycles les uns après les autres ; il s'agit donc d'un procédé cyclique. Le temps que met un adsorbeur pour revenir dans son état initial est appelé temps de cycle. Par principe, chaque adsorbeur suit le même cycle avec un décalage temporel qu'on appelle temps de phase ou plus simplement phase. On a donc la relation :

Temps de phase = temps de cycle / Nombre d'adsorbeurs et on voit que le nombre de phases est égal au nombre d'adsorbeurs.

Ce cycle comporte donc généralement des périodes parmi :

- Production ou Adsorption au cours de laquelle le gaz d'alimentation est introduit par une des extrémités de l'adsorbeur, les composés les plus adsorbables sont adsorbés préférentiellement et le gaz enrichi en les composés les moins adsorbables (gaz produit) est extrait par la seconde extrémité. L'adsorption peut se faire à pression montante, à pression sensiblement constante, voire à pression légèrement descendante.
- Dépressurisation au cours de laquelle l'adsorbeur qui n'est plus alimenté en gaz d'alimentation est évacué par au moins une de ses extrémités d'une partie des composés contenus dans l'adsorbant et les volumes libres. En prenant comme référence le sens de circulation du fluide en période d'adsorption, on peut définir des dépressurisations à co-courant, à contre-courant ou simultanément à co et contre-courant.
- Elution ou Purge au cours de laquelle un gaz enrichi en les constituants les moins adsorbables (gaz de purge) circule à travers le lit d'adsorbant afin d'aider à la désorption des composés les plus adsorbables. La Purge se fait généralement à contre-courant.
- Repressurisation au cours de laquelle l'adsorbeur est au moins partiellement repressurisé avant de reprendre une période d'Adsorption. La repressurisation peut se faire à contre-courant et/ou à co-courant.
- Temps mort au cours de laquelle l'adsorbeur reste dans le même état. Ces temps morts peuvent faire partie intégrante du cycle, permettant la synchronisation d'étapes entre adsorbeurs ou faire partie d'une étape qui s'est terminée avant le temps imparti. Les vannes peuvent être fermées ou rester en l'état selon les caractéristiques du cycle.

Par la suite, on appellera étapes actives les étapes lors desquelles l'état de l'adsorbeur est modifié, par opposition aux temps morts.

Lorsque le produit valorisé est constitué par les constituants les plus adsorbables, on peut ajouter une étape dite de Rinse qui consiste à faire circuler à co-courant dans l'adsorbeur un gaz enrichi en les constituants les plus adsorbables avec l'objectif de chasser de l'adsorbant et des volumes morts les composés les moins adsorbables. Cette étape de Rinse peut se faire à toute pression entre la pression haute et la pression basse et utilise généralement une fraction du produit basse pression après compression. Le gaz extrait de l'adsorbeur peut avoir de nombreuses utilisations (production secondaire de gaz enrichi en les constituants les moins adsorbables, repressurisation, élution, réseau fuel gas...). Dépressurisation et Repressurisation peuvent s'effectuer de différentes manières, surtout lorsque l'unité PSA comprend une pluralité d'adsorbeurs (ou de capacités). On est ainsi amené à définir des étapes élémentaires pour décrire plus exactement les transferts gazeux qui interviennent entre adsorbeurs (ou capacités) et avec le milieu extérieur (circuits d'alimentation, de gaz produit, de gaz basse pression).

Ainsi le gaz évacué lors de la période de dépressurisation peut :

- servir à repressuriser un ou plusieurs adsorbeurs qui se trouvent alors à pression inférieure ; on parle alors d'Equilibrage à pression descendante ou d'Equilibrage Down (Ed)
- servir de gaz d'élution (gaz de purge) pour aider à désorber les constituants les plus adsorbables d'un adsorbeur en basse pression ; on parle alors d'Alimentation-Purge ou de Purge Providing (PP)
- être évacué vers le réseau Basse Pression ; on parle alors de Décompression BP ou de Blow Down (BD)

De la même façon, le gaz que reçoit un adsorbeur lors de sa Repressurisation peut provenir :

- partiellement du gaz de purge lorsque celle-ci s'effectue à pression montante. On continue dans ce cas de parler d'étape d Elution ou de Purge (P) en spécifiant éventuellement à pression montante (Pup).

- d'autres adsorbeurs effectuant des Equilibrages Down (Ed). On parle alors d'Equilibrages Up (Eup)
- du gaz Produit : Rep Pr
- du gaz d'alimentation ou Feed : Rep F

Il convient de préciser ici le rôle des équilibrages. Ils permettent de récupérer une partie des composés les moins adsorbables qui se trouvent dans les volumes morts (espace inter-granulaire pour un lit d'adsorbants particulaires, canaux pour les adsorbants structurés, extrémités de l'adsorbeur...) ou qui sont (faiblement) adsorbés. Ces constituants n'étant plus perdus, cela permet d'augmenter le Rendement d'Extraction des gaz faiblement adsorbables que l'on définit comme la fraction que l'on récupère dans la Production par rapport à leur quantité dans le gaz d'alimentation.

Au moins une partie des Equilibrages Down se faisant à co-courant pour être efficaces, les composés les plus adsorbés ont tendance à progresser vers l'extrémité de sortie. Comme on veut les maintenir dans l'adsorbeur, cela conduit à prévoir un volume supplémentaire d'adsorbant. L'augmentation du rendement lié aux équilibrages conduit à des adsorbeurs plus gros. On définit le volume nécessaire des adsorbeurs pour obtenir un produit à la pureté requise via la Productivité. La Productivité peut s'exprimer simplement en Nm3 de gaz d'alimentation traités par m$^3$ d'adsorbant.

D'autres définitions font appel à la durée d'adsorption, effective ou standardisée, aux Nm$^3$ de gaz produit, voire intègre la pression d'adsorption. Sauf avis contraire, nous nous en tiendrons à la première définition. Les critères de performances que sont le rendement et la productivité sont intimement liés et évoluent le plus souvent en sens inverse. Ainsi, lors de la conception d'une unité PSA, le choix d'un rendement élevé entraine généralement une faible productivité et vice-versa. Dès lors qu'il y a une pluralité N d'adsorbeurs, on peut envisager des équilibrages multiples, l'adsorbeur en dépressurisation fournissant successivement du gaz à divers adsorbeurs à pression initiale inférieure. Un équilibrage peut être complet si en fin de sous-étape les pressions des 2 adsorbeurs sont identiques (à par exemple une dizaine de millibars près) ou partiel (incomplet) si l'échange gazeux est interrompu avant la fin laissant un écart de pression sensible entre les 2 adsorbeurs, par exemple si la variation de pression dans les adsorbeurs au cours de cette sous-étape est égale ou inférieure à 95% de ce qu'elle aurait été dans le cas d'un équilibrage complet. On peut alors indiquer la différence de pression entre les deux adsorbeurs en fin d'étape, par exemple DP2 = 1 bar pour signifier qu'à la fin du second équilibrage il y a 1 bar d'écart entre adsorbeurs.

Afin de mieux expliquer le principe de l'invention, on va à présent prendre le cas des PSA H2, procédé PSA qui a probablement connu le plus de développements ces dernières années du fait de son succès auprès de diverses industries consommatrices d'hydrogène. On entend par là de l'hydrogène à une pureté supérieure à 95% mole, généralement supérieure à 98% mole et pouvant atteindre lorsque le procédé consommateur l'exige des puretés supérieure à 99.99%. De nombreuses améliorations ont déjà été apportées à ces unités que ce soit en termes de facilité d'exploitation, de fiabilité ou de performances. Ainsi, pour ce qui est des performances, à savoir amélioration du rendement ou diminution de l'investissement, différentes approches ont été menées, en particulier :

- Adjonction d'équipements permettant de régénérer l'adsorbant à plus basse pression, comme une pompe à vide ou un éjecteur, ou pour effectuer des recyclages d'une partie du gaz, comme par exemple l'ajout d'un compresseur pour recycler une partie du gaz résiduaire.
- Choix d'adsorbants plus efficaces, plus nombreux et de ce fait mieux adaptés à l'évolution des compositions au sein même de l'adsorbeur, mis en oeuvre sous forme de lits multiples successifs.
- Utilisation d'une pluralité d'adsorbeurs permettant des cycles plus performants par adjonction de nouvelles étapes, par arrangement différent des étapes, par raccourcissement du temps de cycle. Les équilibrages multiples dont on a parlé précédemment font partie des moyens déjà utilisés pour améliorer le rendement d'extraction en hydrogène.

Un certain nombre de documents peuvent illustrer les modifications apportées aux cycles PSA H2.

Le document EP 1 486 245 décrit des cycles PSA H$_2$ à 3 ou 4 équilibrages pour lesquels seul le détail d'arrangement des sous-étapes diffère d'un cycle à l'autre. On peut constater que la majorité des phases de ces cycles contient plusieurs étapes. Par exemple sur le cycle divulgué dans la revendication 1, 7 des 10 phases correspondent au moins à 2 étapes actives : équilibrages 1 et 2 / équilibrage 3 et équilibrage 4 simultané avec alimentation purge / alimentation purge et décompression / décompression et élution / élution et équilibrage 4 / équilibrages 3 et 2 / équilibrage 1 et repressurisation finale.

Par ailleurs, le document US-A-6,454,838 décrit des PSA H$_2$ à 6 adsorbeurs et 4 équilibrages dont le cycle est schématisé dans le Tableau 1 suivant.

Tableau 1

| A | A | A | A |
|-----|-----|-----|-----|
| Eq1 | Eq2 | I | Eq3 |

(suite)

| PP | PP | BD + Eq4 | BD |
|------|------|----------|--------|
| P(pp) | P(pp) | E'q4 | E'q3 |
| I | E'q2 | I | I |
| E'q1 | R(f/p) | R(f/p) | R(f/p) |

Comme on le voit, le gaz d'élution (PP) est extrait de l'adsorbeur entre l'équilibrage Eq3 et une sous étape durant laquelle il y a simultanément dépressurisation à co-courant pour effectuer un quatrième équilibrage et à contre-courant pour commencer la décompression finale. Afin d'être réalisable sans l'emploi de capacité de stockage de gaz intermédiaire, ce cycle comporte plusieurs temps morts I. On peut constater que dans la deuxième phase, il y a 3 étapes d'équilibrage et un temps mort.

Le document US-A-6,565,628 enseigne des cycles à 12, 14 ou 16 adsorbeurs présentant 4 ou 5 équilibrages dont éventuellement une sous-étape avec simultanément fourniture de gaz d'élution et début de décompression finale à contre-courant. Le cycle décrit comprend aussi des temps d'équilibrage courts. Deux phases contiennent 3 étapes actives distinctes (alimentation purge, équilibrage 4 et décompression ou encore Elution, équilibrages 4 et 3).

En outre, le document EP 1 023 934 décrit un cycle PSA $H_2$ à seulement 3 adsorbeurs et 1 équilibrage comportant 4 étapes actives dans la deuxième phase : équilibrage, alimentation-purge, décompression et élution. Pour ce faire, le gaz d'élution est stocké temporairement dans une capacité pour être utilisé avec un décalage temporel. On conçoit que l'empilage de ces 4 durées d'étape va déterminer le temps de phase minimal et par là, en le multipliant par 3 (3 adsorbeurs), le temps de cycle.

Le document US 2013/255 492 décrit un cycle d'un procédé d'adsorption à modulation opère dans un système avec sept adsorbeurs comprenant sept temps de phase avec la deuxième phase comprenant deux étapes actives (« rinse + eq1d ») ;

Le document DE 3526899 décrit un procédé dans lequel au moins une partie des gaz qui sont produits durant l'étape de décompression sont décomprimés dans une turbine. Il décrit également la connaissance générale de l'adsorption en modulation de pression, notamment équilibrer des adsorbeurs durant des phases de décompression et recompression.

Le document US 4 761 167 décrit dans le tableau 8 qui est relié à la figure 4 un cycle avec cinq adsorbeurs et vingt étapes ; plusieurs étapes pouvant être couplées dans un même temps de phase.

On pourrait multiplier les exemples mais il est clair que la tendance actuelle dans le développement des cycles correspond à la mise en oeuvre d'une pluralité de sous-étapes pendant un temps de phase pour permettre d'effectuer les cycles les plus courts possibles avec le moins d'adsorbeurs possibles. Ceci est d'autant plus vrai que l'on produit de grosses quantités d'hydrogène et que l'on souhaite conjointement des rendements d'extraction élevés et des investissements les plus bas possibles, ce qui normalement va à l'opposé.

Ce processus a cependant ses limites dont certaines apparaissent déjà dans les exemples cités. La durée minimale d'une étape peut venir de la physique relative à l'adsorption elle-même, par exemple la cinétique qui fait qu'il faut un certain temps pour arriver à l'équilibre entre phase gazeuse et phase adsorbée et profiter ainsi pleinement des capacités d'adsorption des adsorbants utilisés mais aussi plus prosaïquement du temps nécessaire à manoeuvrer les vannes ou des vitesses maximales des gaz à travers des lits d'adsorbants (attrition, mise en mouvement...). Il peut être ainsi intéressant de coupler deux étapes élémentaires en une seule comme par exemple équilibrage 4 et alimentation purge qui permet d'obtenir un débit moyen plus faible (document EP 1 486 245). Le couplage Décompression à contre-courant et Equilibrage à co-courant permet également de diminuer le débit gazeux vers chacune des extrémités (document US-A-6,454,838). Cela se fait évidement au prix d'une complexité plus importante qui nécessite des moyens de contrôle et de sécurité plus importants. Une autre limitation à la multiplication des étapes dans un même temps de phase est le fait qu'une majorité des étapes doit être synchrone entre adsorbeurs. Par exemple un équilibrage 2 à pression descendante doit se faire simultanément avec un équilibrage 2 à pression montante, c'est-à-dire en pratique qu'un adsorbeur doit être prêt à recevoir le gaz fourni par un autre. Si l'équilibrage 2 est au milieu d'une phase pour l'un, il doit être également au milieu de la phase pour l'autre. Cela peut impliquer des temps morts comme dans l'exemple 2 ou l'utilisation de capacités de stockage pour créer des décalages temporels comme dans le document EP 1 023 934.

Enfin, au fur et à mesure que l'on raccourcit les étapes, en particulier les équilibrages, il devient difficile d'atteindre en fin d'étape le point d'équilibre optimum, c'est-à-dire la même pression dans les deux adsorbeurs dans le cas de ces équilibrages et il est courant de sacrifier un peu de performances (ici du rendement) afin de limiter la taille des vannes. On réalise alors des équilibrages incomplets comme mentionné précédemment.

Partant de là, un problème qui se pose est de fournir un procédé PSA présentant de bonnes performances et un investissement réduit.

Une solution de l'invention est un procédé d'adsorption à modulation de pression (PSA) pour produire un flux gazeux enrichi en composé X à partir d'un flux gazeux d'alimentation, mettant en oeuvre N adsorbeurs avec N ≥ 7, chaque adsorbeur étant soumis à un cycle de pression présentant :

- un temps de phase correspondant à la durée du cycle de pression divisé par le nombre d'adsorbeurs, et
- une série d'étapes actives dont au moins une étape d'équilibrage,

caractérisé en ce que :

- chaque adsorbeur n suit le cycle de pression avec un décalage d'un temps de phase par rapport au cycle de pression de l'adsorbeur n-1 avec n ≤ N, et
- pendant chaque temps de phase ne se déroule qu'une étape active ou une partie d'une étape active

avec les étapes actives faisant partie du groupe : adsorption, équilibrage à pression descendante, alimentation purge, décompression à contre-courant, purge, équilibrage à pression montante, et recompression au moyen du flux gazeux d'alimentation ou du flux gazeux enrichi en composé X. Selon le cas le procédé selon l'invention peut présenter une ou plusieurs des caractéristiques suivantes :

- les adsorbeurs mis en oeuvre présentent un diamètre compris entre 0,1 m et 6 m, de préférence entre 0,1 m et 3 m ;
- les adsorbeurs présentent une hauteur comprise entre 1 m et 10 m ;
- le temps de phase est supérieur ou égal à 10 secondes ;
- le cycle de pression est effectué sur une durée supérieure à 1 minute, de préférence supérieure à 2 minutes ;
- le composé X est de l'hydrogène ou du $CO_2$ ;
- les adsorbeurs comprennent des adsorbants particulaires ;
- les adsorbeurs comprennent des adsorbants structurés ;
- le cycle de pression est contrôlé par un ensemble de vannes et/ou de distributeurs. Par distributeur on entend des systèmes qui permettent selon leur position de mettre en relation ou de bloquer une pluralité de circuits ;
- le flux gazeux d'alimentation présente un débit supérieur à 100 000 $Nm^3$/h.

Autrement dit, à l'opposé de la tendance actuelle, l'invention consiste à ce que chaque étape élémentaire dure une phase entière ou un nombre entier de phases ou, dit autrement, que chacune des phases constituant le cycle ne corresponde qu'à une seule étape élémentaire ou à une seule sous-étape si la dite étape se déroule sur plusieurs temps de phase.

Cette invention ne concerne a priori que le cas de PSA relativement élaborés dont les cycles de pression comprennent au moins 5 étapes élémentaires distinctes et préférentiellement au moins 7, dans le but d'obtenir des performances plus élevées que dans les cycles les plus basiques tels par exemple qu'un cycle qui ne comprendrait que Adsorption /Décompression contre-courant / élution / repressurisation. Pour ce type de cycles, une solution classique à 2 ou préférentiellement à 3 adsorbeurs (Adsorption / Décompression / élution + Repressurisation) sera généralement meilleure.

L'invention va être décrite à présent plus en détail à partir d'un exemple. Partons du cycle utilisé dans le document EP 1 023 934 correspondant au Tableau 2 ci-dessous :

Tableau 2

| Ads | Ads | Ads | Ads |
|-----|-----|-----|-----|
| Ed1 | PP | BD | P |
| Eup1 | Rep | Rep | Rep |

Lorsque le premier adsorbeur est en production sur la totalité d'une phase, le second qui a terminé cette phase d'adsorption va successivement fournir du gaz d'équilibrage, puis du gaz d'élution, va se décomprimer à contre-courant jusqu'à la basse pression du cycle (BD) puis va être purgé (P) ; on rappelle que ceci est possible grâce à l'existence d'une capacité de stockage temporaire du gaz d'élution. Le troisième adsorbeur est d'abord repressurisé via l'équilibrage Eup1 puis par du gaz de production (ou éventuellement par du gaz d'alimentation).

Ce cycle ne nécessite que 3 adsorbeurs mais son temps de phase va être imposé par la deuxième phase. Il sera difficile de descendre en dessous de 120secondes (par exemple 20 secondes pour chacune des trois premières étapes et 60s pour l'étape d'élution).

Cette durée impose alors un temps d'adsorption de 120 secondes et une étape de repressurisation de 100 secondes complétant l'équilibrage Eup1 de 20 secondes forcément.

La taille de l'adsorbeur correspondra donc à l'épuration de 100% du débit d'alimentation pendant 120 secondes.

Le cycle selon l'invention pourra correspondre à un des 2 cycles proposés ci-dessous :

Tableau 3

| Ads | Ads | Ed1 | PP | BD | P | P | Eup1 | Rep |
|-----|-----|-----|----|----|---|---|------|-----|

Ou

Tableau 4

| Ads | Ads | Ads | Ed1 | PP | BD | P | P | P | Eup1 | Rep |
|-----|-----|-----|-----|----|----|---|---|---|------|-----|

On veut maintenir dans tous les cas 60 secondes minimum de durée d'adsorption et d'élution.

On peut arriver à ce résultat en utilisant 9 adsorbeurs et un temps de phase de 30 secondes (Tableau 3) ou 11 adsorbeurs avec un temps de phase de 20 secondes (Tableau 4).

Cela parait paradoxal de vouloir utiliser de 3 à 4 fois plus d'adsorbeurs pour un résultat équivalent à priori en termes de rendement.

En fait, dans le cas du tableau 3 chaque adsorbeur traite 50% du débit de gaz d'alimentation pendant 2 fois 30 secondes : l'adsorbeur est 4 fois plus petit que l'adsorbeur initial. Le volume global d'adsorbant dans l'unité ne représente que les ¾ du volume d'adsorbant de l'unité de départ.

Dans le cas du cycle du tableau 4, chaque adsorbeur traite 1/3 du débit total pendant 3 fois 20 secondes : l'adsorbeur est 6 fois plus petit que l'adsorbeur de base et le volume total d'adsorbant ne représente plus qu'environ 60% du volume initial.

On a donc un gain sensible sur le coût de l'adsorbant.

Concernant les adsorbeurs eux-mêmes, le coût n'étant pas entièrement proportionnel à la taille, le gain correspondant au fait d'utiliser plus d'adsorbeurs de plus faible volume peut être moindre. Il faut cependant noter que lorsqu'on produit de très gros débits d'hydrogène, par exemple plus de 100 000 Nm3/h comme c'est à présent le cas dans le raffinage et la pétrochimie, le volume des adsorbeurs, même avec les cycles multi-lits les plus performants, est de plusieurs dizaines de m3 et que cette taille même pose problèmes : l'épaisseur de la virole, les dimensions des fonds...limitent les sources d'approvisionnement d'autant que le transport devient de plus en plus délicat. Sur ces points, il a été suggéré de remplacer un adsorbeur de grosse taille par une pluralité d'adsorbeurs plus petits fonctionnant en parallèle. Cela revient également à multiplier le nombre d'adsorbeurs de l'unité PSA mais sans diminuer le volume total.

Cette dernière solution permet de conserver un nombre réduit de grosses vannes (un groupe d'adsorbeurs fonctionnant en parallèle pouvant conserver le jeu de vannes de l'adsorbeur remplacé) mais le problème des tailles importantes concerne également les vannes. Il s'agit à la fois d'un problème économique et mécanique. Pour effectuer des étapes courtes, le temps de manoeuvre des vannes doit être très rapide afin de limiter les temps morts. La mécanisation nécessaire, la résistance mécanique, les moyens de contrôle qui ont du être adaptés à ce fonctionnement font que le coût de ces vannes peut être plus que proportionnel à leur taille. Là également, il a été proposé de remplacer une vanne 100% par 2 vannes 50%. On est ainsi amené à multiplier le nombre de vannes utilisées pour des raisons de coût de ce matériel mais sans en tirer profit pour le cycle du PSA.

La présente invention répond également à ce problème de vannes. On a vu dans les exemples ci-dessus que chaque adsorbeur en phase d'adsorption traitait suivant le cas ½ ou 1/3 du débit d'alimentation. Chaque adsorbeur va produire de même ½ ou 1/3 de la production d'hydrogène : ces vannes là (alimentation, production) vont donc être réduites dans les mêmes proportions.

De façon plus surprenante, il en est de même pour les autres vannes constituant le "skid vannes" d'un adsorbeur. En effet la taille des vannes d'équilibrage, de purge alimentation, de décompression à contre-courant dépend de la quantité de gaz à transférer et du temps Tv imparti pour ce transfert. La quantité de gaz à transférer -entre 2 pressions fixées- dépend elle-même du volume V de l'adsorbeur. Le critère V / Tv est représentatif de la taille de ces vannes.

Comparons notre 2ème exemple (tableau 4) au cas de base. Les durées des étapes qu'on vient de citer étant identiques entre les 2 PSA, le débit à passer par les vannes du PSA selon l'invention n'est plus que de 1/6 du débit correspondant du cas de base.

On peut noter également côté investissement la suppression de la capacité de stockage de gaz d'élution et côté performances le fait que la production est parfaitement stable dans le cas selon l'invention car le débit pour la repressurisation finale est prélevé sur une phase complète et donc de façon continue dans le temps, ce qui n'était pas le cas précédemment. Outre le transport plus aisé d'équipements de taille moindre, l'implantation sur site peut si nécessaire s'adapter à la place disponible en disposant la pluralité d'adsorbeurs de différentes façons (en ligne, en L, en rangées, en U...).

Il convient à présent de mieux définir les étapes actives élémentaires du PSA dont la durée selon l'invention est une phase complète ou un nombre entier de phases.

On peut définir une étape comme l'intervalle de temps durant lequel le trajet des fluides reste inchangé, ce qui correspond également à une position donnée ouverte (à 100%, à x %, en régulation..) ou fermée pour chacune des vannes du skid.

On va donc avoir comme étapes actives indépendantes les plus classiques :

Adsorption, équilibrage down 1, équilibrage down 2,.... équilibrage down i, purge alimentation, décompression à contre-courant, purge, équilibrage up i,... équilibrage up 2, équilibrage up 1, repressurisation finale (par le flux enrichi en composé X et/ou par le flux d'alimentation). La lettre « i » entend que le nombre d'équilibrage n'est pas limité.

On notera qu'un équilibrage peut être total ou incomplet. Pour laisser par exemple 1 bar de différence de pression entre adsorbeurs, on peut être amené à fermer les vannes mettant les deux adsorbeurs en communication avant la fin de la phase en cours créant ainsi un temps mort. L'existence de ce temps mort ne change pas la philosophie de l'invention et on continue d'avoir une seule étape active pendant la dite phase.

Tableau 5

| Ed2 | Ed3 (DP+1) /I | PP |
|---|---|---|

Ainsi la séquence ci-dessus du Tableau 5 dans laquelle l'équilibrage 3 est interrompu alors qu'il reste 1 bar de différence de pression entre adsorbeurs et dans laquelle le temps de phase en question se prolonge par un temps mort rentre dans le cadre de l'invention.

Les équilibrages se font généralement par circulation à co-courant dans l'adsorbeur en dépressurisation et à contre-courant dans celui en repressurisation c'est-à-dire qui reçoit le gaz. On peut avoir simultanément un équilibrage "par le haut et par le bas" constituant une étape.

Il peut exister d'autres étapes avec deux actions simultanées comme par exemple : équilibrage et alimentation-purge, alimentation-purge et dépressurisation contre-courant, équilibrage up et repressurisation finale....

Si les deux actions sont simultanées d'un bout à l'autre, cela constitue une seule étape au sens de l'invention. Par contre, si par exemple dans le premier exemple, l'alimentation-purge est interrompue alors que l'équilibrage continue, on doit considérer que le cycle comprend à ce niveau deux étapes distinctes : un équilibrage et alimentation-purge suivi par une étape d'équilibrage.

De même si une étape d'équilibrage / alimentation-purge est suivie par une étape durant laquelle il n'y a que fourniture de gaz de purge, on a deux étapes distinctes au sens de l'invention.

A titre d'illustration, on peut reprendre le cycle du Tableau 6

Tableau 6

| A | A | A | A |
|---|---|---|---|
| Eq1 | Eq2 | I | Eq3 |
| PP | PP | BD + Eq4 | BD |
| P(pp) | P(pp) | E'q4 | E'q3 |
| I | E'q2 | I | I |
| E'q1 | R(f/p) | R(f/p) | R(f/p) |

Ce cycle correspond à 6 adsorbeurs avec 6 temps de phase, chacune des phases correspondant à une ligne du tableau.

L'unité selon l'invention comprendrait par exemple 15 adsorbeurs suivant le cycle ci-dessous avec un décalage d'un temps de phase entre adsorbeurs

Tableau 7

| Ads | Ads | Ed1 | Ed2 | Ed 3 | PP | BD+Ed4 | BD | P | P | Eup4 | Eup3 | Eup2 | Eup1 | Rep |
|---|---|---|---|---|---|---|---|---|---|---|---|---|---|---|

On voit apparaître un autre intérêt des cycles selon l'invention. Le fait d'avoir une seule étape élémentaire par phase conduit à ce qu'il y ait automatiquement une synchronisation des étapes qui vont en couple, comme les équilibrages down et up correspondants. Il n'y a pas à prévoir de temps mort pour faire correspondre ce type d'étapes comme c'est le cas avec le cycle du tableau 6 (voir deuxième et cinquième phases).

On a décrit jusqu'à présent un cycle de PSA hydrogène car c'est une des applications a priori les plus intéressantes compte tenu du développement du marché. L'invention dans son principe même peut s'appliquer a priori à la totalité des cycles PSA au sens le plus général.

Ainsi on peut envisager par exemple une unité PSA destinée à déballaster en $CO_2$ un gaz de haut fourneaux à l'oxygène pour le recycler tout en produisant du $CO_2$ à une pureté suffisante pour le séquestrer.

Un cycle possible correspond au tableau suivant :

Tableau 8

| Ads | Ads |
|---|---|
| Ed1 | Ed2 |
| Rinse (+PP) | BD |
| BD (V) | BD(V) |
| P | Eup2 |
| Eup1 | Rep |

L'étape de Rinse consiste à faire circuler à co-courant dans le lit d'adsorbant une fraction de la production de $CO_2$ à la pression de fin du $2^{ème}$ équilibrage afin de chasser de la zone d'entrée de l'adsorbant les constituants les plus légers (CO, $CH_4$, $H_2$, $N_2$) pour récupérer ensuite lors du Blow down (dépressurisation à contre-courant) un effluent très enrichi en $CO_2$. On notera que le $CO_2$ est également extrait de l'adsorbeur pendant la phase suivante avec l'aide (éventuelle) d'une pompe à vide.

Le gaz récupéré en sortie lors de l'étape de Rinse est utilisé lors d'une étape de purge P pour repousser le $CO_2$ vers l'extrémité d'entrée de l'adsorbeur. Le gaz récupéré en sortie de purge est évacué à l'extérieur de l'unité ou recyclé dans le gaz d'alimentation.

Le cycle est construit afin de respecter les couplages temporels Ed1 / Eup1, Ed2 / Eup2, Rinse (+PP) / P et d'assurer un pompage en continu, c'est-à-dire passant d'un adsorbeur au suivant.

Selon le principe de l'invention, on utilisera a priori une unité à 10 adsorbeurs :

Tableau 9

| Ads | Ed1 | Ed2 | Rinse | BD | BD(V) | P | Eup2 | Eup1 | Rep |
|---|---|---|---|---|---|---|---|---|---|

Les adsorbeurs pourraient être de taille moitié avec la même pompe à vide cependant (deux fois moins de gaz à pomper en deux fois moins de temps).

Les applications de base envisagées pour des PSA selon l'invention sont préférentiellement des unités traitant de gros débit, par exemple plus de 100 000 Nm3/h, avec des adsorbants classiques et des vannes usuelles. Les phases seront de durée préférentiellement égale à 10 secondes et plus, conduisant à des cycles de durée supérieure à la minute et préférentiellement d'au moins 2 minutes.

Néanmoins, les cycles selon l'invention sont également bien adaptés aux nouvelles structures adsorbantes en cours de développement.

Par nouvelles structures, on entend adsorbants structurés. L'adsorbant ne se présente plus sous forme de particules millimétriques (billes, bâtonnets, concassés, pastilles...) mais avec des géométries plus complexes et des tailles de plusieurs centimètres voire de plusieurs dizaines de centimètres. Il peut s'agir de monolithes, de contacteurs à passages parallèles, d'ensemble de fibres en parallèle, de tissu adsorbant...

Le point que l'on veut souligner ici est qu'il est aujourd'hui du moins difficile de réaliser des adsorbants structurés compatibles avec les PSA de grande dimension. Plutôt que de mettre en parallèle dans un adsorbeur plusieurs modules de dimension maximum réalisable (section), il peut être intéressant d'utiliser le procédé selon l'invention et d'utiliser plusieurs phases (donc plusieurs adsorbeurs) pour effectuer les étapes du cycle.

On pourrait alors mettre en oeuvre des cycles du type suivant comportant 22 (ou plus) phases :

Tableau 10

| 1 | 2 | 3 | 4 | 5 | 6 | 7 | 8 | 9 | 10 | 11 |
|---|---|---|---|---|---|---|---|---|---|---|
| Ads | Ads | Ads | Ads | Ads | Ed1 | Ed2 | Ed3 | Ed 3 | PP | PP |

(suite)

| 12 | 13 | 14 | 15 | 16 | 17 | 18 | 19 | 20 | 21 | 22 |
|----|----|----|----|----|----|------|------|------|------|-----|
| BD | BD | P | P | P | P | Eup3 | Eup3 | Eup2 | Eup1 | Rep |

Les temps de phase avec ce nouveau type d'adsorbant pouvant être de l'ordre de la seconde ou de quelques secondes, on a supposé ici que l'adsorption se passait sur une durée de 5 phases, l'équilibrage 3 (à la pression la plus basse des équilibrages) que l'on souhaitait total sur 2 phases, l'alimentation-purge et la décompression à contre-courant sur 2 phases chacune et enfin l'élution sur 4 phases.

De façon générale de tels cycles permettent également de mettre en oeuvre très facilement des cycles de substitution en cas de problème sur un adsorbeur. En prenant l'exemple du cycle du tableau 10, on peut supprimer une phase d'adsorption et continuer de produire 80% de la production mais on pourrait également continuer de traiter 100% du gaz d'alimentation en ne gardant qu'une des deux sous-étapes de l'équilibrage 3. On perdrait ainsi de l'ordre d'un point en rendement d'extraction. On pourrait également raccourcir l'étape d'élution en ne la faisant durer que sur trois phases. Ce type de cycle autorise une grande souplesse d'utilisation en marches dites dégradées (avec un adsorbeur au moins retiré du cycle).

De même, avec un cycle selon l'invention, il est relativement aisé de le faire évoluer en rajoutant des adsorbeurs et donc des phases. On peut de la sorte augmenter par exemple le débit traité et la production en rajoutant une phase d'adsorption ou le rendement en rajoutant une phase d'équilibrage down et la phase correspondante d'équilibrage up. La taille moindre des adsorbeurs permet éventuellement des rajouts d'adsorbeurs impossibles dans le cas standard.

Si de façon générale, les transferts de fluides sont contrôlés via des vannes, il est possible, en particulier pour les unités de type URPSA dont on vient de parler d'utiliser des distributeurs, c'est-à-dire des systèmes qui permettent selon leur position de mettre en relation ou de bloquer une pluralité de circuits. Un seul distributeur de ce type, à piston ou préférentiellement rotatif, permet de remplacer plusieurs vannes standards

**Revendications**

1.  Procédé d'adsorption à modulation de pression (PSA) pour produire un flux gazeux enrichi en composé X à partir d'un flux gazeux d'alimentation, mettant en oeuvre N adsorbeurs avec N $\geq$ 7, chaque adsorbeur étant soumis à un cycle de pression présentant :

    - un temps de phase correspondant à la durée du cycle de pression divisé par le nombre d'adsorbeurs, et
    - une série d'étapes actives dont au moins une étape d'équilibrage,

    **caractérisé en ce que** :

    - chaque adsorbeur n suit le cycle de pression avec un décalage d'un temps de phase par rapport au cycle de pression de l'adsorbeur n-1 avec n $\leq$ N, et
    - pendant chaque temps de phase ne se déroule qu'une étape active ou une partie d'une étape active

    avec les étapes actives faisant partie du groupe : adsorption, équilibrage à pression descendante, alimentation purge, décompression à contre-courant, purge, équilibrage à pression montante, et recompression au moyen du flux gazeux d'alimentation ou du flux gazeux enrichi en composé X.

2.  Procédé selon la revendication 1, **caractérisé en ce que** les adsorbeurs mis en oeuvre présentent un diamètre compris entre 0,1 m et 6 m, de préférence entre 0,1 m et 3 m.

3.  Procédé selon l'une des revendications 1 ou 2, **caractérisé en ce que** les adsorbeurs présentent une hauteur comprise entre 1 m et 10 m.

4.  Procédé selon l'une des revendications 1 à 3, **caractérisé en ce qu'**au moins une étape se déroule sur plus d'une phase.

5.  Procédé selon l'une des revendications 1 à 4, **caractérisé en ce que** le temps de phase est supérieur ou égal à 10 secondes.

**6.** Procédé selon l'une des revendications 1 à 5, **caractérisé en ce que** le cycle de pression est effectué sur une durée supérieure à 1 minute, de préférence supérieure à 2 minutes.

**7.** Procédé selon l'une des revendications 1 à 6, **caractérisé en ce que** le composé X est de l'hydrogène ou du CO2.

**8.** Procédé selon l'une des revendications 1 à 7, **caractérisé en ce que** les adsorbeurs comprennent des adsorbants particulaires.

**9.** Procédé selon l'une des revendications 1 à 7, **caractérisé en ce que** les adsorbeurs comprennent des adsorbants structurés.

**10.** Procédé selon l'une des revendications 1 à 9, **caractérisé en ce que** le cycle de pression est contrôlé par un ensemble de vannes et/ou de distributeurs.

**11.** Procédé selon l'une des revendications 1 à 10, **caractérisé en ce que** le flux gazeux d'alimentation présente un débit supérieur à 100 000 Nm$^3$/h.

**Patentansprüche**

**1.** Druckwechsel-Adsorptionsverfahren (PSA) zur Erzeugung eines mit Verbindung X angereicherten Gasstroms aus einem Speisegasstrom unter Verwendung von N Adsorbern mit N $\geq$ 7, wobei jeder Adsorber einem Druckzyklus unterworfen wird, der Folgendes aufweist:

- eine Phasenzeit, die der Dauer des Druckzyklus entspricht, geteilt durch die Anzahl der Adsorber, und
- eine Reihe von aktiven Schritten, darunter mindestens einen Ausgleichsschritt,

**dadurch gekennzeichnet, dass**:

- jeder Adsorber n dem Druckzyklus mit einem Versatz von einer Phasenzeit gegenüber dem Druckzyklus des Adsorbers n-1 mit n $\leq$ N folgt, und
- während jeder Phasenzeit nur ein aktiver Schritt oder ein Teil eines aktiven Schrittes erfolgt,

wobei die aktiven Schritte zur Gruppe gehören: Adsorption, Abwärtsdruckausgleich, Spülungszufuhr, Gegenstromdekompression, Spülung, Aufwärtsdruckausgleich und Rekompression mittels des Speisegasstroms oder des mit Verbindung X angereicherten Gasstroms.

**2.** Verfahren nach Anspruch 1, **dadurch gekennzeichnet, dass** die eingesetzten Adsorber einen Durchmesser zwischen 0,1 m und 6 m, vorzugsweise zwischen 0,1 m und 3 m aufweisen.

**3.** Verfahren nach einem der Ansprüche 1 oder 2, **dadurch gekennzeichnet, dass** die Adsorber eine Höhe zwischen 1 m und 10 m aufweisen.

**4.** Verfahren nach einem der Ansprüche 1 bis 3, **dadurch gekennzeichnet, dass** mindestens ein Schritt über mehr als eine Phase erfolgt.

**5.** Verfahren nach einem der Ansprüche 1 bis 4, **dadurch gekennzeichnet, dass** die Phasenzeit mehr als oder gleich 10 Sekunden beträgt.

**6.** Verfahren nach einem der Ansprüche 1 bis 5, **dadurch gekennzeichnet, dass** der Druckzyklus über einen Zeitraum von mehr als 1 Minute, vorzugsweise mehr als 2 Minuten durchgeführt wird.

**7.** Verfahren nach einem der Ansprüche 1 bis 6, **dadurch gekennzeichnet, dass** die Verbindung X Wasserstoff oder C02 ist.

**8.** Verfahren nach einem der Ansprüche 1 bis 7, **dadurch gekennzeichnet, dass** die Adsorber partikuläre Adsorptionsmittel umfassen.

9.  Verfahren nach einem der Ansprüche 1 bis 7, **dadurch gekennzeichnet, dass** die Adsorber strukturierte Adsorptionsmittel umfassen.

10. Verfahren nach einem der Ansprüche 1 bis 9, **dadurch gekennzeichnet, dass** der Druckzyklus durch eine Anordnung von Ventilen und/oder Verteilern gesteuert wird.

11. Verfahren nach einem der Ansprüche 1 bis 10, **dadurch gekennzeichnet, dass** der Speisegasstrom einen Durchsatz von mehr als 100.000 Nm$^3$/h aufweist.

**Claims**

1.  Method for pressure swing absorption (PSA) to produce a gas stream enriched with compound X from a feed gas stream, implementing N adsorbers with N ≥ 7, each adsorber being subjected to a pressure cycle that has:

    - a phase time that corresponds to the duration of the pressure cycle divided by the number of adsorbers, and
    - a series of active steps of which at least one step of balancing,

    **characterised in that**:

    - each adsorber n follows the pressure cycle with a shift in the phase time with respect to the pressure cycle of the adsorber n-1 with n ≤ N, and
    - during each phase time only one active step or portion of an active step occurs

    with the active steps being part of the group: adsorption, descending pressure balancing, purge feed, counter-current decompression, purge, rising pressure balancing, and recompression by means of the feed gas stream or the gas stream enriched with compound X.

2.  Method according to claim 1, **characterised in that** the adsorbers implemented have a diameter of between 0.1m and 6m, preferably of between 0.1m and 3m.

3.  Method according to any of the claims 1 or 2, **characterised in that** the adsorbers have a height of between 1m and 10m.

4.  Method according to any of claims 1 to 3, **characterised in that** at least one step occurs over more than one phase.

5.  Method according to any of claims 1 to 4, **characterised in that** the phase time is greater than or equal to 10 seconds.

6.  Method according to any of claims 1 to 5, **characterised in that** the pressure cycle is carried out over a duration greater than 1 minute, preferably greater than 2 minutes.

7.  Method according to any of claims 1 to 6, **characterised in that** the compound X is hydrogen or CO2.

8.  Method according to any of claims 1 to 7, **characterised in that** the adsorbers comprise particulate adsorbents.

9.  Method according to any of claims 1 to 7, **characterised in that** the adsorbers comprise structured adsorbents.

10. Method according to any of claims 1 to 9, **characterised in that** the pressure cycle is controlled by a set of valves and/or distributors.

11. Method according to any of claims 1 to 10, **characterised in that** the feed gas stream has a flow rate of greater than 100,000Nm$^3$/h.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1486245 A
- US 6454838 A
- US 6565628 A
- EP 1023934 A
- US 2013255492 A
- DE 3526899
- US 4761167 A